# EUROPÄISCHE PATENTSCHRIFT

(11) **EP 3 194 893 B1**
(45) Veröffentlichungstag und Bekanntmachung des Hinweises auf die Patenterteilung: **24.06.2020**
(21) Anmeldenummer: 15760198.0
(22) Anmeldetag: 09.09.2015
(51) Int. Cl.: G01D 5/04

(54) **VERLAGERUNGSGEBER FÜR KRAFTFAHRZEUG**
DISPLACEMENT SENSOR FOR A MOTOR VEHICLE
CAPTEUR DE DÉPLACEMENT POUR UN VÉHICULE AUTOMOBILE

(30) Priorität: 17.09.2014 DE 102014218685
(43) Veröffentlichungstag der Anmeldung: 26.07.2017
(73) Patentinhaber: Continental Teves AG & Co. OHG, 60488 Frankfurt am Main (DE)
(72) Erfinder: HAVERKAMP, Martin, 60385 Frankfurt (DE); GOLL, Manfred, 63695 Glauburg (DE); SCHMID, Bernhard, 61169 Friedberg (DE)
(86) Internationale Anmeldenummer: PCT/EP2015/070645
(87) Internationale Veröffentlichungsnummer: WO 2016/041832

(56) Entgegenhaltungen:
- EP-A1- 0 972 660
- GB-A- 2 289 106
- US-A- 4 838 563

## Beschreibung

Die vorliegende Erfindung betrifft einen Verlagerungsgeber für die Erfassung einer Verlagerung einer Komponente eines Kraftfahrzeugs.

GB 2 289 106 beschreibt einen Verlagerungsgeber zur Erfassung einer Verlagerung einer Komponente eines Kraftfahrzeugs, bei dem ein elastisches Kopplungselement zwischen einer Koppelstange und einem Hebel verwendet wird.

Bekannte Verlagerungsgeber zur Erfassung einer Verlagerung einer Komponente eines Kraftfahrzeugs umfassen Winkelsensoren, welche über eine Anlenkung umfassend eine Koppelstange und einen Hebel angelenkt werden. Die Anlenkung bewirkt dabei eine Drehbewegung einer Welle eines Winkelsensors. Üblicherweise ist die Kop-pelstange hierbei über ein Gelenk, beispielsweise mit einer an der Koppelstange befestigten Kugelpfanne und einem an dem Hebel fixierten Kugelkopf, mit dem Hebel verbunden. Die Koppelstange übersetzt auf diese Art und Weise eine im Wesentlichen lineare Bewegung eines Fixpunktes in eine Drehbewegung an dem Hebel bzw. der Welle des Winkelsensors.

Nachteilig bei diesem Stand der Technik ist, dass die Ausbildung des Gelenks zwischen Koppelstange und Hebel technisch verhältnismäßig aufwändig realisierbar ist. So müssen in der Montage des Verlagerungsgebers zunächst sämtliche Bauteile, insbesondere die Einzelteile des Gelenks zwischen Koppelstange und Hebel, zusammengesetzt und abgestimmt werden. Dies kostet nicht nur Zeit sondern verursacht auch in Bezug auf die verschiedenen Einzelteile erhöhte Kosten.

Es ist daher die der Erfindung zugrunde liegende Aufgabe, eine Anlenkung eines Winkelsensors mit weniger Einzelteilen und reduziertem Montageaufwand anzugeben.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Verlagerungsgeber für die Erfassung einer Verlagerung einer Komponente eines Kraftfahrzeugs, einer verlagerbaren Koppelstange gelöst, welche mit der Komponente des Kraftfahrzeugs koppelbar ist, um eine Verlagerung der Komponente des Kraftfahrzeugs zu erfassen, einem Hebel zur Übersetzung einer Verlagerung der verlagerbaren Koppelstange in eine Drehung, welche die Verlagerung der verlagerbaren Koppelstange repräsentiert und einem elastischen Kopplungselement, welches die verlagerbare Koppelstange mit dem Hebel elastisch verbindet, um die Verlagerung der Koppelstange in die Drehung des Hebels zu überführen. Dadurch wird beispielsweise der technische Vorteil erreicht, dass durch die elastische Verbindung keine zusätzlichen Einzelteile zur Ausbildung des Gelenks zwischen Koppelstange und Hebel eingesetzt werden müssen. Dies reduziert die Teilekosten und durch eine reduzierte Zahl an Montageschritten werden ebenso die Montagekosten gesenkt. Zugleich ermöglicht die elastische Verbindung zwischen Koppelstange und Hebel eine entsprechende Positionierung relativ zu dem zu koppelnden Gegenstand während der Montage. Der Verlagerungsgeber kann auf diese Weise besonders einfach in ein Fahrzeug eingebaut werden.

Vorzugsweise handelt es sich bei dem Verlagerungsgeber um einen Verlagerungsgeber für einen Höhenstandsensor, wobei der Hebel mit einer Welle samt einem Positionsgeber verbunden bzw. gekoppelt ist.

In einer vorteilhaften Ausführungsform umfasst die Komponente des Kraftfahrzeugs ein Fahrwerk, eine Karosserie, einen Scheinwerfer oder eine Kraftfahrzeugachse. Dadurch wird beispielsweise der technische Vorteil erreicht, dass der Verlagerungsgeber für die Erfassung einer Verlagerung unterschiedlicher Komponenten bzw. in unterschiedlichen Bereichen eines Kraftfahrzeugs einsetzbar ist.

In einer vorteilhaften Ausführungsform ist ein dem Hebel zugewandtes Koppelstangenende über das elastische Kopplungselement mit einem der Koppelstange zugewandten Hebelende elastisch verbunden, wobei das elastische Kopplungselement feder-elastisch ausgebildet ist. Dadurch wird beispielsweise der technische Vorteil erreicht, dass die Gelenkfunktion des Kopplungselements derart ausgeführt werden kann, dass unter Verwendung eines geeigneten Werkstoffs die zur Winkelmessung notwendige Verformung mit geeigneter Verformungskraft im elastischen Dehnungsbereich des Werkstoffs realisiert werden kann. Gleichzeitig kann durch die elastisch verformbare Geometrie eine bestimmte Rückstellkraft auf den Hebel ausgeübt werden, die üblicherweise mittels eines zusätzlichen Federelements erzeugt würde.

Vorzugsweise ist das elastische Kopplungselement (105) feder-elastisch ausgebildet.

In einer vorteilhaften Ausführungsform ist das elastische Kopplungselement aus Metall oder einem elastischen Kunststoff, insbesondere aus einem gummihaltigen elastischen Kunststoff, oder aus einem thermoplastisch geformten Kunststoff geformt. Dadurch wird beispielsweise der technische Vorteil erreicht, dass unter Berücksichtigung der konkreten Werkstoffauswahl die Ausgestaltung des elastischen Kopplungselements beeinflussbar ist. Somit kann im Fall eines thermoplastischen Kunststoffs eine Ausgestaltung des elastischen Kopplungselements erfolgen, welche geringe Dehnungen aufnehmen kann. Hingegen kann im Fall eines gummihaltigen Kunststoffs eine Ausgestaltung des elastischen Kopplungselements erfolgen, welche größere Dehnungen aufnehmen kann.

In einer vorteilhaften Ausführungsform sind die verlagerbare Koppelstange, der Hebel sowie das elastische Kopplungselement durch ein einstückiges Formteil, insbesondere durch ein einstückiges Kunststoff-Formteil oder ein einstückiges Metallformteil, gebildet. Dadurch wird beispielsweise der technische Vorteil erreicht, dass dies die Teilekosten zusätzlich reduziert und durch eine zusätzlich reduzierte Zahl an Montageschritten werden ebenso die Montagekosten gesenkt. In der vorliegenden Ausführungsform bestehen die verlagerbare Koppelstange, der Hebel sowie das elastische Kopplungselement lediglich aus einem einzigen Teil.

In einer vorteilhaften Ausführungsform weist das elastische Kopplungselement eine geringere Dicke als eine Dicke des Hebels oder der verlagerbaren Koppelstange auf, bzw.
ist das elastische Kopplungselement durch eine Materialverjüngung oder durch eine federelastische Lasche zwischen dem Hebel und der verlagerbaren Koppelstange gebildet. Dadurch wird beispielsweise der technische Vorteil erreicht, dass die Aufgabe des elastischen Kopplungselements, als Gelenk zwischen Koppelstange und Hebel zu wirken, auch bei einstückiger Ausbildung nur von dem Kopplungselement wahrgenommen wird. Durch den Grad der Verjüngung besteht somit neben der Werkstoffauswahl ein zusätzlicher Parameter zur Bestimmung des elastischen Verhaltens des Kopplungselements.

In einer vorteilhaften Ausführungsform weist das elastische Kopplungselement eine Biegung auf.Dadurch wird die verlagerbare Koppelstange und der Hebel in einer Ruheposition unter einem vorbestimmten Winkel zu halten. Außerdem wird beispielsweise der technische Vorteil erreicht, dass ausgehend von der Ruheposition der Koppelstange und des Hebels ein elastisches Verhalten des Kopplungselements in jeder Verlagerungsrichtung einer Komponente eines Kratfahrzeugs bewirkt werden kann.

In einer vorteilhaften Ausführungsform ist die Biegung zumindest teilweise kreisförmig wobei die Biegung durch eine zumindest teilweise Auswölbung gebildet ist, oder das elastische Kopplungselement weist Querrippen auf, welche quer zu einer Biegerichtung des elastischen Kopplungselements verlaufen.

In einer vorteilhaften Ausführungsform ist das elastische Kopplungselement als einzelnes Bauteil ausgeführt, das mit Befestigungselementen oder form- und/oder kraftschlüssig mit dem Hebel und der Koppelstange verbunden ist. Auf diese Weise kann das elastische Kopplungselement hinsichtlich Material und Form besser auf dessen Funktion hin ausgelegt werden. Beispielsweise kann ein elastisches Material mit hoher Biegewechselfestigkeit Verwendet werden, während Hebel und Koppelstange ein festes Material mit hoher mechanischer Stabilität aufweisen.

In einer vorteilhaften Ausführungsform weist die Koppelstange zwei parallele Stege auf, welche durch eine Verstärkungswand miteinander verbunden sind. Dadurch wird beispielsweise der technische Vorteil erreicht, dass die Steifigkeit der Kop-pelstange deutlich größer ist als die Steifigkeit des elastischen Kopplungselements. Dies ist insbesondere dann von Bedeutung, wenn Koppelstange, elastisches Kopplungselement und Hebel einstückig ausgebildet sind. Hier kann das Problem auftreten, dass aufgrund vorbestimmter Werkstoffeigenschaften des elastischen Kopplungselements eine unzureichende Steifigkeit der Koppelstange vorliegt. In diesem Fall kann die Steifigkeit durch die parallel verlaufenden Stege, welche durch eine Verstärkungswand miteinander verbunden sind, erhöht werden. In einer vorteilhaften Ausführungsform weist die Koppelstange an einem dem Hebel abgewandten Koppelstangenende eine Wellenaufnahme sowie eine in der Wellenaufnahme drehbar gelagerte Welle auf, welche mit der Komponente des Kraftfahrzeugs koppelbar ist. Dadurch wird beispielsweise der technische Vorteil erreicht, dass der erfindungsgemäße Verlagerungsgeber für die Erfassung einer Verlagerung einer Komponente eines Kraftfahrzeugs mit bestehenden Schnittstellen eines Kraftfahrzeugs koppelbar ist, ohne dass auf Seiten der Komponente irgendwelche Veränderungen vorgenommen werden müssen. Vielmehr bietet es sich sogar an, dass bestehende Verlagerungsgeber durch einen erfindungsgemäßen Verlagerungsgeber ersetzt werden können.

In einer vorteilhaften Ausführungsform umfasst der Hebel an einem der Koppelstange abgewandten Hebelende eine Wellenaufnahme für die Aufnahme einer Welle eines Winkelaufnehmers oder eines Winkelsensors. Dadurch wird beispielsweise der technische Vorteil erreicht, dass ein Winkelaufnehmer oder ein Winkelsensor direkt mit der Wellenaufnahme des Hebels gekoppelt werden kann. Folglich kann der Verlagerungsgeber mit einem bestehenden Winkelaufnehmer oder Winkelsensor verbunden werden. Hierbei ist keine Veränderung seitens des Winkelaufnehmers oder des Winkelsensors notwendig.

Vorzugsweise besteht das elastische Kopplungselement aus einem Material, dessen elastische Verformbarkeit und/oder Biegewechselfestigkeit die des Materials der Koppelstange und des Hebels übertrifft. Ungewollte Verformungen an Koppelstange oder Hebel, die beispielsweise in Folge der Bewegung auftreten können, lassen sich so verhindern, da sich das elastische Kopplungselement umso mehr verformt, je größer der Unterschied ist.

Erfindungsgemäß umfasst das elastische Kopplungselement, welches mit einer Komponente des Kraftfahrzeugs koppelbar ist, eine Schraubenfeder oder weist bereichsweise die Form einer Schraubenfeder auf. Dies erlaubt, nahezu unabhängig vom Material, eine hohe elastische Verformbarkeit und ist in der Herstellung kostengünstig. Besonders kostengünstig ist eine einstückige Ausführung von Koppelstange, elastischem Kopplungselement und Hebel mit mindestens einer Schraubenfeder.

Vorzugsweise ist die Mittelachse der mindestens einen Schraubenfeder gleich ausgerichtet wie die Drehachse der Drehung des Hebels. Dadurch wird die Drehbewegung von Koppelstange und Hebel stabilisiert.

Gemäß einem weiteren Aspekt der Erfindung wird die Aufgabe durch eine Messvorrichtung für die Messung einer Verlagerung einer Komponente eines Kraftfahrzeugs mit dem Verlagerungsgeber gemäß einer ausgeführten Ausführungsform für die Erfassung der Verlagerung der Komponente des Kraftfahrzeugs und einem Winkelaufnehmer mit einer Welle gelöst, welche mit einem der Koppelstange abgewandten Hebelende des Hebels verbunden ist, um einen Drehwinkel einer Drehung des Hebels um eine durch die Welle verlaufende Drehachse bei einer Verlagerung der Koppelstange zu erfassen, wobei der erfasste Drehwinkel die Messung der Verlagerung der Komponente des Kraftfahrzeugs repräsentiert. Dadurch wird beispielsweise der technische Vorteil erreicht, dass durch die elastische Verbindung keine zusätzlichen Einzelteile zur Ausbildung des Gelenks zwischen Koppelstange und Hebel eingesetzt werden müssen. Dies reduziert die Teilekosten und durch eine reduzierte Zahl an Montageschritten werden ebenso die Montagekosten gesenkt. Zusätzlich wird der Vorteil erreicht, dass der erfindungsgemäße Verlagerungsgeber für die Erfassung einer Verlagerung einer Komponente eines Kraftfahrzeugs mit bestehenden Schnittstellen einer Komponente koppelbar ist, ohne dass auf Seiten der Komponente irgendwelche Veränderungen vorgenommen werden müssen. Vielmehr ist es möglich, dass bestehende Verlagerungsgeber durch einen erfindungsgemäßen Verlagerungsgeber ersetzt werden können. Des Weiteren wird erreicht, dass ein Winkelaufnehmer oder ein Winkelsensor direkt mit der Wellenaufnahme des Hebels gekoppelt werden kann. Folglich kann der Verlagerungsgeber mit einem bestehenden Winkelaufnehmer oder Winkelsensor verbunden werden. Hierbei ist keine Veränderung seitens des Winkelaufnehmers oder Winkelsensors notwendig.

Ausführungsbeispiele der Erfindung sind in den Zeichnungen dargestellt und werden im Folgenden näher beschrieben.

Es zeigen:
Fig. 1 eine schematische Darstellung eines Verlagerungsgebers mit Winkelsensor, um das Verständnis der Erfindung zu erleichtern,
Fig. 2a eine schematische Seitendarstellung des Verlagerungsgebers aus Fig. 1,
Fig. 2b eine schematische Seitendarstellung einer weiteren Ausführungsform eines Verlagerungsgebers, um das Verständnis der Erfindung zu erleichtern,
Fig. 3a eine schematische Darstellung einer weiteren Ausführungsform eines Verlagerungsgebers mit Winkelsensor, um das Verständnis der Erfindung zu erleichtern,
Fig. 3b eine schematische Darstellung einer weiteren Ausführungsform eines Verlagerungsgebers mit Winkelsensor, um das Verständnis der Erfindung zu erleichtern,
Fig. 4 eine schematische Darstellung einer weiteren Ausführungsform eines Verlagerungsgebers, um das Verständnis der Erfindung zu erleichtern,
Fig. 5 eine schematische Darstellung einer weiteren Ausführungsform eines Verlagerungsgebers, um das Verständnis der Erfindung zu erleichtern,
Fig. 6 eine schematische Darstellung einer weiteren Ausführungsform eines Verlagerungsgebers, um das Verständnis der Erfindung zu erleichtern,
Fig. 7 eine schematische Darstellung einer Ausführungsform eines Verlagerungsgebers gemäß der Erfindung.
Fig. 8 eine schematische Darstellung einer weiteren Ausführungsform eines Verlagerungsgebers gemäß der Erfindung.

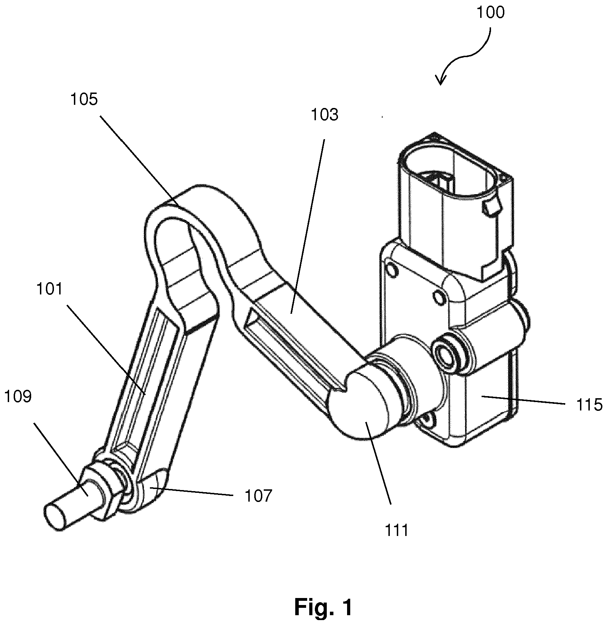

Die **Fig. 1** zeigt eine schematische Darstellung eines Verlagerungsgebers 100 mit Winkelsensor 115. Der Verlagerungsgeber 100 umfasst eine verlagerbare Koppelstange 101, welche beispielsweise mit einem Kraftfahrzeugfahrwerk koppelbar ist, um eine Verlagerung des Kraftfahrzeugfahrwerks zu erfassen. Ebenso wäre es jedoch denkbar die verlagerbare Koppelstange 101 mit einer Karosserie, einem Scheinwerfer oder einer Kraftfahrzeugachse zu koppeln. Des Weiteren umfasst der Verlagerungsgeber 100 einen Hebel 103 zur Übersetzung einer Verlagerung der verlagerbaren Koppelstange 101 in eine Drehung. Zwischen Koppelstange 101 und Hebel 103 ist ein elastisches Kopplungselement 105 angeordnet, welches die Koppelstange 101 mit dem Hebel 103 elastisch verbindet. Das elastische Kopplungselement 105 ist federelastisch ausgebildet um unter Verwendung eines geeigneten Werkstoffs die zur Winkelmessung notwendige Verformung mit geeigneter Verformungskraft im elastischen Dehnungsbereich des Werkstoffs zu realisieren. Zusätzlich wird durch die federelastische Ausbildung eine bestimmte Rückstellkraft auf den Hebel 103 ausgeübt. Alternativ wäre es jedoch ebenso denkbar, das elastische Kopplungselement 105 unter Verwendung eines elastischen Metalls oder eines Federblechs zu realisieren. Hierbei könnten Koppelstange 101, Hebel 103 und das elastische Kopplungselement 105 aus Metall hergestellt werden. Zusätzlich könnte das elastische Kopplungselement 105 unter Verwendung eines elastischen Metalls oder eines Federblechs in einen Kunststoffhebel und eine Kunststoffkoppelstange eingelegt werden.

Vorliegend sind die verlagerbare Koppelstange 101, der Hebel 103 sowie das elastische Kopplungselement 105 durch ein einstückiges Kunststoff-Formteil ausgebildet, wobei das elastische Kopplungselement 105 eine geringere Dicke als eine Dicke des Hebels 103 oder der verlagerbaren Koppelstange 101 aufweist und durch eine Materialverjüngung bzw. eine federelastische Lasche realisiert ist. Um die verlagerbare Koppelstange 101 und den Hebel 103 in einer Ruheposition unter einem vorbestimmten Winkel halten zu können, weist das elastische Kopplungselement 105 eine kreisförmig gewölbte Biegung auf. Zusätzlich oder alternativ kann das elastische Kopplungselement 105 Querrippen aufweisen, welche quer zu einer Biegerichtung des elastischen Kopplungselementes 105 verlaufen (nicht gezeigt). Die Koppelstange 101 weist zwei parallele Stege auf, welche durch eine Verstärkungswand miteinander verbunden sind und umfasst an einem dem Hebel 103 abgewandten Koppelstangenende eine Wellenaufnahme 107 sowie eine in der Wellenaufnahme 107 drehbar gelagerte Welle 109. Die drehbar gelagerte Welle 109 ist für die Erfassung einer Verlagerung einer Komponente eines Kraftfahrzeugs mit bestehenden Schnittstellen einer Komponente koppelbar.

An einem der Koppelstange 101 abgewandten Hebelende des Hebels 103 befindet sich eine Wellenaufnahme 111 für die Aufnahme einer Welle 113 eines Winkelaufnehmers oder eines Winkelsensors 115. Hier kann ein Winkelaufnehmer oder Winkelsensor 115 direkt mit der Wellenaufnahme 111 des Hebels 103 gekoppelt werden und es sind keine baulichen oder technischen Veränderungen seitens des Winkelaufnehmers oder des Winkelsensors 115 notwendig.

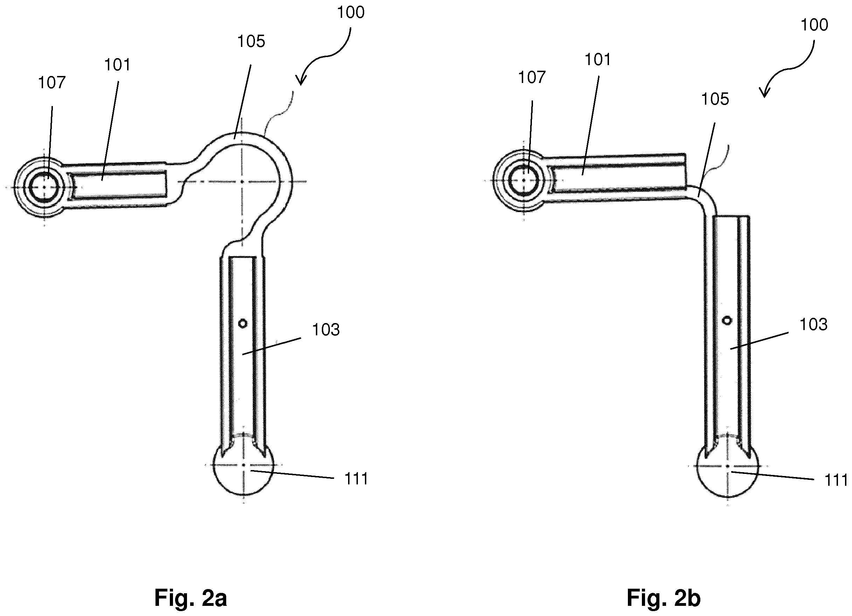

Die **Fig. 2a** zeigt eine schematische Seitendarstellung des Verlagerungsgebers 100 aus Fig. 1. Die **Fig. 2b** zeigt eine schematische Seitendarstellung einer weiteren Ausführungsform eines Verlagerungsgebers 100. Auf eine wiederholte Beschreibung identischer Merkmale der vorausgehenden Figur wird verzichtet. Die Fig. 2a und 2b unterscheiden sich in Bezug auf die Ausgestaltung des elastischen Kopplungselements 105 zwischen Koppelstange 101 und Hebel 103. Dieser Unterschied liegt einerseits in der konkreten Auswahl des Materials für das elastische Kopplungselement 105 begründet. Während die Ausgestaltung des elastischen Kopplungselements 105 in Fig. 2a eher geringere Dehnungen aufnehmen kann, ist die Ausgestaltung des elastischen Kopplungselements 105 in Fig. 2b eher für größere Dehnungen geeignet. Folglich eignet sich im Falle der Ausgestaltung gemäß Fig. 2a der Einsatz eines thermoplastischen Kunststoffs. Hingegen eignet sich im Falle der Ausgestaltung gemäß Fig. 2b der Einsatz eines gummihaltigen Kunststoffs.

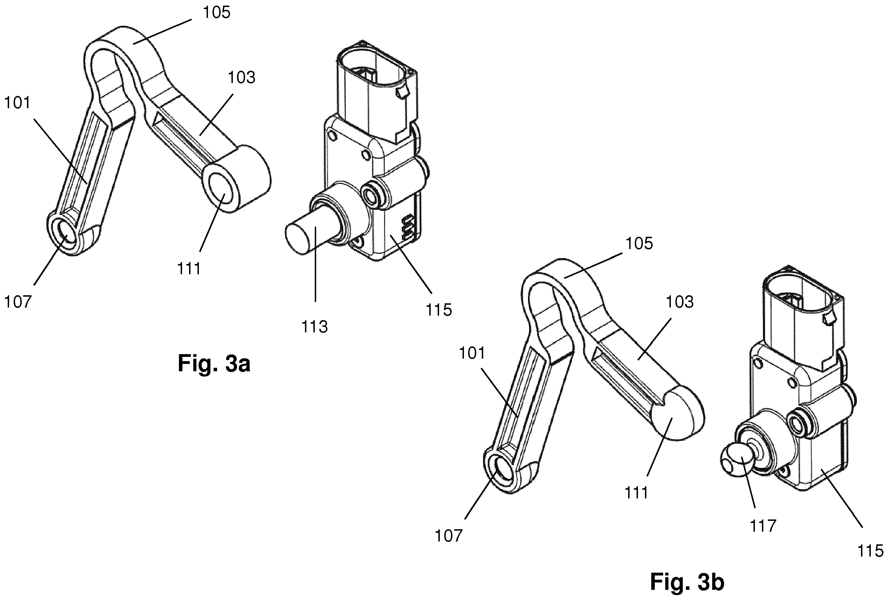

Die **Fig. 3a** zeigt eine schematische Darstellung einer weiteren Ausführungsform eines Verlagerungsgebers 100 mit einem Winkelsensor 115. Auf eine wiederholte Beschreibung identischer Merkmale der vorausgehenden Figuren wird verzichtet. Der Winkelsensor 115 ist über eine Welle 113 mit zylindrischer Geometrie für eine kraftschlüssige Verbindung mit dem Hebel 103 verbunden.

Die **Fig. 3b** zeigt eine schematische Darstellung einer weiteren Ausführungsform eines Verlagerungsgebers 100 mit Winkelsensor 115. Auf eine wiederholte Beschreibung identischer Merkmale der vorausgehenden Figuren wird verzichtet. Der Winkelsensor 115 ist hier über einen Kugelkopf 117 mit dem Hebel 103 verbunden.

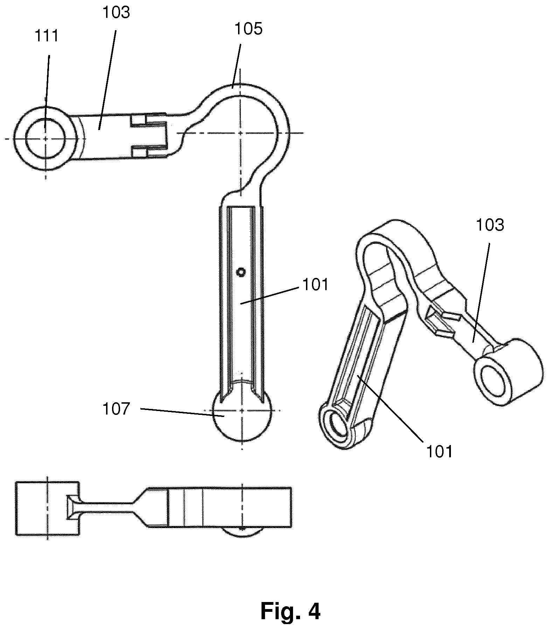

Die **Fig. 4** zeigt eine schematische Darstellung einer weiteren Ausführungsform eines Verlagerungsgebers 100. Auf eine wiederholte Beschreibung identischer Merkmale der vorausgehenden Figuren wird verzichtet. Der Hebel 103 ist in einer geeigneten elastisch verformbaren Geometrie ausgebildet um auftretende Relativbewegungen zwischen Fixierung der Koppelstange 101 und Fixierung des Winkelsensor und daraus resultierende Querkräfte auf den Hebel 103 zu kompensieren. Alternativ oder zusätzlich wäre es möglich die Koppelstange 101 in der elastisch verformbaren Geometrie auszubilden.

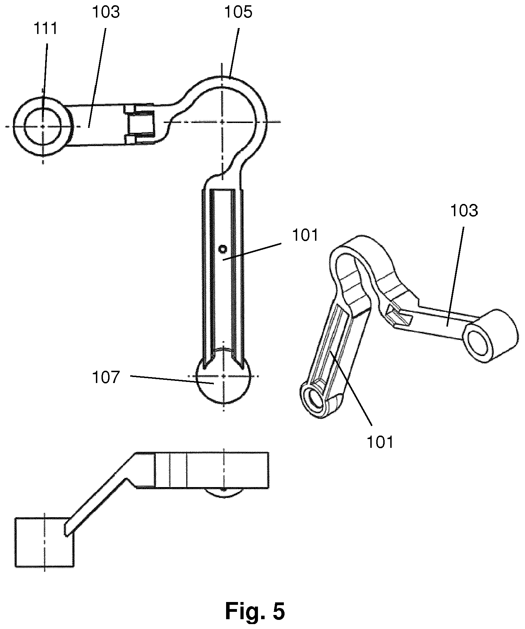

Die **Fig. 5** zeigt eine schematische Darstellung einer weiteren Ausführungsform eines Verlagerungsgebers 100. Auf eine wiederholte Beschreibung identischer Merkmale der vorausgehenden Figuren wird verzichtet. Um Abstände zwischen Fixierungsebene der Koppelstange 101 und der Fixierungsebene des Winkelsensors zu kompensieren ist der Hebel 103 mit einer angewinkelten Geometrie ausgebildet. Alternativ oder zusätzlich kann auch die Koppelstange 101 mit einer derartigen angewinkelten Geometrie ausgebildet sein.

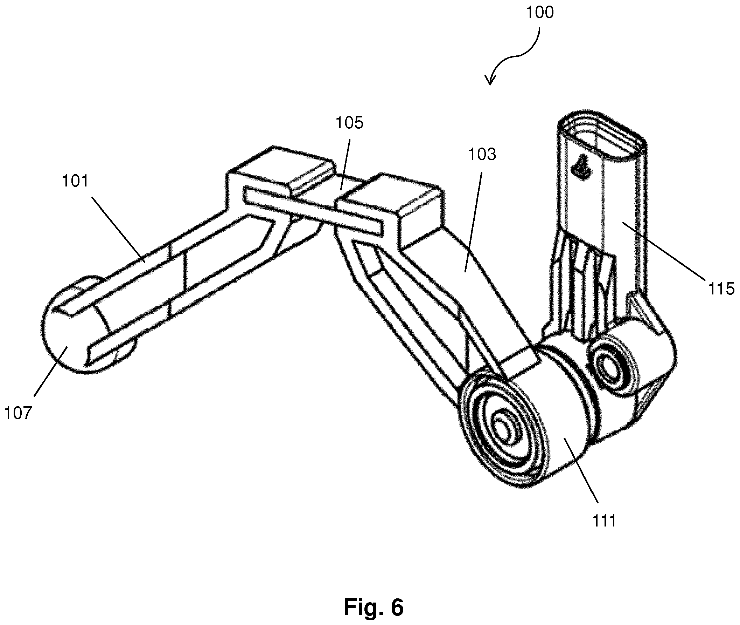

Die **Fig. 6** zeigt eine schematische Darstellung einer weiteren Ausführungsform eines Verlagerungsgebers 100. Auf eine wiederholte Beschreibung identischer Merkmale der vorausgehenden Figuren wird verzichtet. Das elastische Kopplungselement 105 ist hier ein einzelnes bzw. separates Bauteil, das durch eine Klebeverbindung mit dem Hebel 103 und der verlagerbaren Koppelstange 101 verbunden ist. Eine reine Klemmverbindung wäre jedoch ebenfalls denkbar. Durch Verwendung eines weichen Materials für das elastische Kopplungselement 105 und eines harten Materials für den Hebel 103 und die verlagerbare Koppelstange 101 wird gewährleistet, dass trotz hoher Biegewechselbeanspruchung eine hohe Lebensdauer erreicht wird.

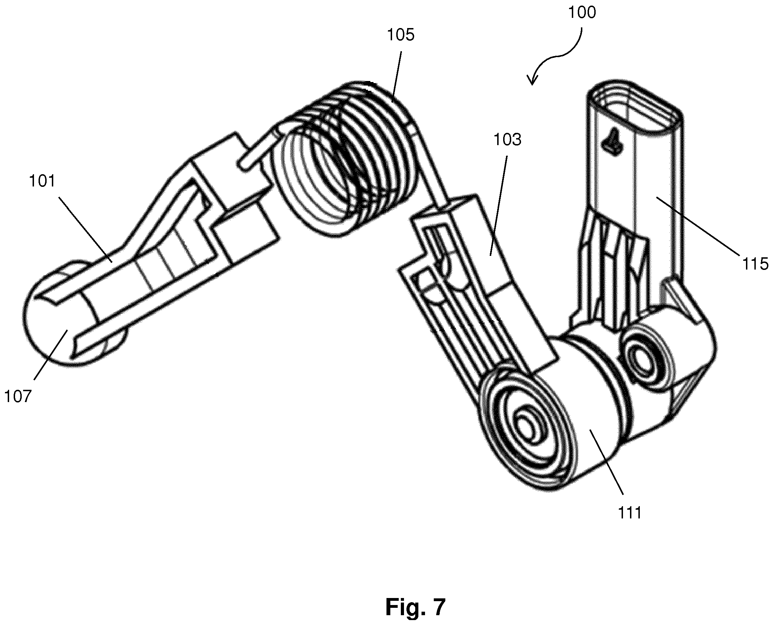

In **Fig. 7** wird eine schematische Darstellung einer Ausführungsform eines Verlagerungsgebers 100 gemäß der Erfindung gezeigt. Auf eine wiederholte Beschreibung identischer Merkmale der vorausgehenden Figuren wird verzichtet. Das elastische Kopplungselement 105 ist hier als Feder, insbesondere als metallische Schraubenfeder ausgeführt, die durch elastische Verformung ein Verdrehen zwischen Hebel 103 und verlagerbarer Koppelstange 101 erlaubt. Deren Verbindung mit dem elastischem Kopplungselement 105 ist in Form einer Einbettung des Metalls in Kunststoff hergestellt. Andere starre Befestigungsarten oder andere Arten elastischer Schraubenfedern wären jedoch ebenso zielführend. Durch hohe Biegewechselfestigkeit wird hier eine lange Lebensdauer des Verlagerungsgebers 100 ermöglicht.

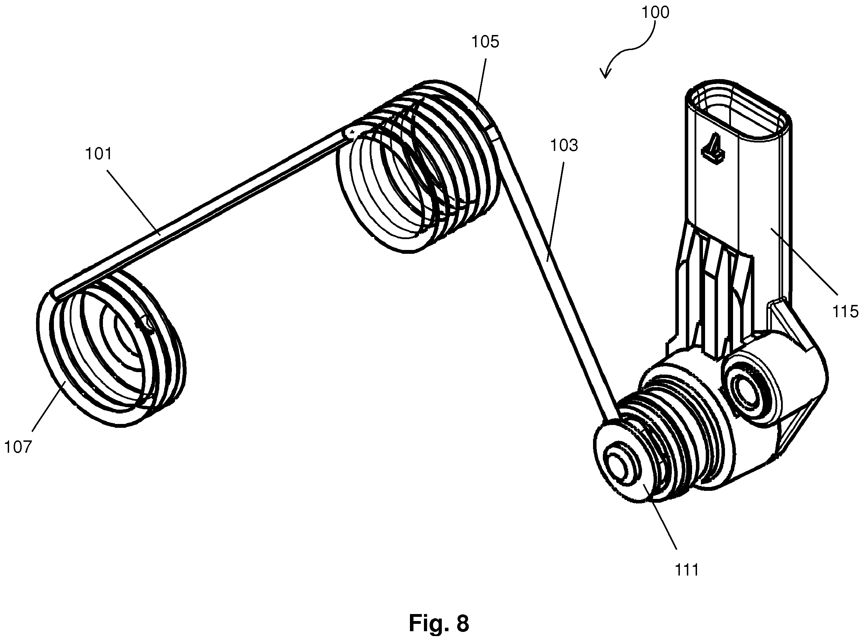

Die **Fig. 8** zeigt eine schematische Darstellung einer weiteren Ausführungsform eines Verlagerungsgebers 100 gemäß der Erfindung. Auf eine wiederholte Beschreibung identischer Merkmale der vorausgehenden Figuren wird verzichtet. Der Hebel 103 und die verlagerbare Koppelstange 101 sind in das elastische Kopplungselement 105 integriert bzw. zusammen mit diesem als einstückiges Bauteil ausgeführt. Für die elastische Verformbarkeit sorgt eine erste Schraubenfeder. Sie gewährleistet die Verdrehbarkeit zwischen Hebel 103 und verlagerbarer Koppelstange 101. Die zweite Schraubenfeder bildet die Wellenaufnahme der Koppelstange 107, bzw. gewährleistet die drehbare Lagerung an der Wellenaufnahme. Hinsichtlich der Biegewechselfestigkeit erlaubt diese Ausführungsform eine hohe Lebensdauer.

Verlagerungsgeber 100 für die Erfassung einer Verlagerung einer Komponente eines Kraftfahrzeugs, mit:
einer verlagerbaren Koppelstange 101, welche mit einer Komponente des Kraftfahrzeugs koppelbar ist, um eine Verlagerung der Komponente zu erfassen; einem Hebel 103 zur Übersetzung einer Verlagerung der verlagerbaren Koppelstange 101 in eine Drehung, welche die Verlagerung der verlagerbaren Koppelstange 101 repräsentiert; und einem elastischen Kopplungselement 105, welches die verlagerbare Koppelstange 101 mit dem Hebel 103 elastisch verbindet, um die Verlagerung der Koppelstange 101 in die Drehung des Hebels 103 zu überführen.

Verlagerungsgeber 100 nach Anspruch 1, wobei die Komponente eine der folgenden Komponenten ist: Fahrwerk, Karosserie, Scheinwerfer oder Kraftfahrzeugachse.

Verlagerungsgeber 100 nach einem der vorstehenden Ansprüche, wobei ein dem Hebel 103 zugewandtes Koppelstangenende über das elastische Kopplungselement mit einem der Koppelstange zugewandten Hebelende elastisch verbunden ist.

Verlagerungsgeber 100 nach einem der vorstehenden Ansprüche, wobei das elastische Kopplungselement 105 feder-elastisch ist.

Verlagerungsgeber 100 nach einem der vorstehenden Ansprüche, wobei das elastische Kopplungselement 105 aus einem elas-tischen Kunststoff, insbesondere aus einem gummihaltigen elastischen Kunststoff, oder aus einem thermoplastisch geformten Kunststoff geformt ist.

Verlagerungsgeber 100 nach einem der vorstehenden Ansprüche, wobei die verlagerbare Koppelstange 101, der Hebel 103 sowie das elastische Kopplungselement 105 durch ein einstückiges Formteil, insbesondere durch ein einstückiges Kunststoff-Formteil, gebildet sind.

Verlagerungsgeber 100 nach Anspruch 6, wobei das elastische Kopplungselement 105 eine geringere Dicke als eine Dicke des Hebels 103 oder der verlagerbaren Koppelstange 101 aufweist.

Verlagerungsgeber 100 nach Anspruch 6 oder 7, wobei das elastische Kopplungselement 105 durch eine Materialverjüngung oder durch eine federelastische Lasche zwischen dem Hebel 103 und der verlagerbaren Koppelstange 101 gebildet ist.

Verlagerungsgeber 100 nach einem der vorstehenden Ansprüche, wobei das elastische Kopplungselement 105 eine Biegung aufweist, um die verlagerbare Koppelstange 101 und den Hebel 103 in einer Ruheposition unter einem vorbestimmten Winkel zu halten.

Verlagerungsgeber 100 nach Anspruch 9, wobei die Biegung zumindest teilweise kreisförmig ist oder wobei die Biegung durch eine zumindest teilweise Auswölbung gebildet ist.

Verlagerungsgeber 100 nach einem der vorstehenden Ansprüche, wobei das elastische Kopplungselement 105 Querrippen aufweist, welche quer zu einer Biegerichtung des elastischen Kopplungselementes 105 verlaufen.

Verlagerungsgeber 100 nach einem der vorstehenden Ansprüche, wobei die Koppelstange 101 zwei parallele Stege aufweist, welche durch eine Verstärkungswand miteinander verbunden sind.

Verlagerungsgeber 100 nach einem der vorstehenden Ansprüche, wobei die Koppelstange 101 an einem dem Hebel 103 abgewandten Koppelstangenende eine Wellenaufnahme 107 sowie einen in der Verlagerungsgeber 100 nach einem der vorstehenden Ansprüche, wobei die Koppelstange 101 zwei parallele Stege aufweist, welche durch eine Verstärkungswand miteinander verbunden sind.

Verlagerungsgeber 100 nach einem der vorstehenden Ansprüche, wobei die Koppelstange 101 an einem dem Hebel 103 abgewandten Koppelstangenende eine Wellenaufnahme 107 sowie einen in der Wellenaufnahme 107 drehbar gelagerte Welle 109 aufweist, welche mit der Komponente des Kraftfahrzeugs koppelbar ist.

Verlagerungsgeber 100 nach einem der vorstehenden Ansprüche, wobei der Hebel 103 einen Längssteg umfasst.

Verlagerungsgeber 100 nach einem der vorstehenden Ansprüche, wobei der Hebel 103 an einem der Koppelstange 101 abgewandten Hebelende eine Wellenaufnahme 111 für die Aufnahme einer Welle 113 eines Winkelaufnehmers oder Winkelsensors 115 umfasst.

Messvorrichtung für die Messung einer Verlagerung einer Komponente eines Kraftfahrzeugs, mit:
dem Verlagerungsgeber 100 gemäß einem der Ansprüche 1 bis 15 für die Erfassung der Verlagerung der Komponente des Kraftfahrzeugs; und einem Winkelaufnehmer 115 mit einer Welle 113, welche mit einem der Koppelstange 101 abgewandten Hebelende des Hebels 103 verbunden ist, um einen Drehwinkel einer Drehung des Hebels 103 um eine durch die Welle 113 verlaufende Drehachse bei einer Verlagerung der Koppelstange 101 zu erfassen, wobei der erfasste Drehwinkel die Messung der Verlagerung der Komponente des Kraftfahrzeugs repräsentiert.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

### Bezugszeichenliste

- 101: Koppelstange
- 103: Hebel
- 105: Elastisches Kopplungselement
- 107: Wellenaufnahme der Koppelstange
- 109: Drehbar gelagerte Welle
- 111: Wellenaufnahme des Hebels
- 113: Welle des Winkelaufnehmers
- 115: Winkelaufnehmer oder Winkelsensor
- 117: Welle mit Kugelkopf

## Patentansprüche

1. Verlagerungsgeber (100) für die Erfassung einer Verlagerung einer Komponente eines Kraftfahrzeugs, mit:
einer verlagerbaren Koppelstange (101), welche mit einer Komponente des Kraftfahrzeugs koppelbar ist, um eine Verlagerung der Komponente zu erfassen; einem Hebel (103) zur Übersetzung einer Verlagerung der verlagerbaren Koppelstange (101) in eine Drehung, welche die Verlagerung der verlagerbaren Koppelstange (101) repräsentiert; und einem elastischen Kopplungselement (105), welches die verlagerbare Koppelstange (101) mit dem Hebel (103) elastisch verbindet, um die Verlagerung der Koppelstange (101) in die Drehung des Hebels (103) zu überführen, **dadurch gekennzeichnet, dass** das elastische Kopplungselement (105) eine Schraubenfeder umfasst oder bereichsweise die Form einer Schraubenfeder aufweist.

2. Verlagerungsgeber (100) nach Anspruch 1, wobei die Komponente eine der folgenden Komponenten ist: Fahrwerk, Karosserie, Scheinwerfer oder Kraftfahrzeugachse.

3. Verlagerungsgeber (100) nach einem der vorstehenden Ansprüche, wobei ein dem Hebel (103) zugewandtes Koppelstangenende über das elastische Kopplungselement mit einem der Koppelstange zugewandten Hebelende elastisch verbunden ist.

4. Verlagerungsgeber (100) nach einem der vorstehenden Ansprüche, wobei das elastische Kopplungselement (105) feder-elastisch ausgebildet ist.

5. Verlagerungsgeber (100) nach einem der vorstehenden Ansprüche, wobei die verlagerbare Koppelstange (101), der Hebel (103) sowie das elastische Kopplungselement (105) durch ein einstückiges Formteil, insbesondere durch ein einstückiges Kunststoff-Formteil oder ein einstückiges Metallformteil, gebildet sind.

6. Verlagerungsgeber (100) nach Anspruch 5, wobei das elastische Kopplungselement (105) eine geringere Dicke als eine Dicke des Hebels (103) oder der verlagerbaren Koppelstange (101) aufweist.

7. Verlagerungsgeber (100) nach Anspruch 5 oder 6, wobei das elastische Kopplungselement (105) durch eine Materialverjüngung zwischen dem Hebel (103) und der verlagerbaren Koppelstange (101) gebildet ist.

8. Verlagerungsgeber (100) nach einem der Ansprüche 1 bis 4, wobei das elastische Kopplungselement (105) als einzelnes Bauteil ausgeführt ist, das mit Befestigungselementen oder form- und/oder kraftschlüssig mit dem Hebel (103) und der Koppelstange (101) verbunden ist.

9. Verlagerungsgeber (100) nach Anspruch 8, wobei das elastische Kopplungselement (105) aus einem Material besteht, dessen elastische Verformbarkeit und/oder Biegewechselfestigkeit die des Materials der Koppelstange (101) und des Hebels (103) übertrifft.

10. Verlagerungsgeber (100) nach einem der vorstehenden Ansprüche, wobei das elastische Kopplungselement (105) eine Biegung aufweist.

11. Verlagerungsgeber (100) nach einem der vorstehenden Ansprüche, wobei das elastische Kopplungselement (105) aus Metall oder einem elastischen Kunststoff, insbesondere aus einem gummihaltigen elastischen Kunststoff, oder aus einem thermoplastisch geformten Kunststoff geformt ist.

12. Verlagerungsgeber 100 nach Anspruch 10, wobei die Biegung zumindest teilweise kreisförmig ist oder wobei die Biegung durch eine zumindest teilweise Auswölbung gebildet ist.

13. Verlagerungsgeber (100) nach einem der vorstehenden Ansprüche, wobei die Mittelachse der mindestens einen Schraubenfeder gleich ausgerichtet ist wie die Drehachse der Drehung des Hebels (103).

14. Messvorrichtung für die Messung einer Verlagerung einer Komponente eines Kraftfahrzeugs, mit:
dem Verlagerungsgeber (100) gemäß einem der Ansprüche 1 bis 13 für die Erfassung der Verlagerung der Komponente des Kraftfahrzeugs; und einem Winkelaufnehmer (115) mit einer Welle (113), welche mit einem der Koppelstange (101) abgewandten Hebelende des Hebels (103) verbunden ist, um einen Drehwinkel einer Drehung des Hebels (103) um eine durch die Welle (113) verlaufende Drehachse bei einer Verlagerung der Koppelstange (101) zu erfassen, wobei der erfasste Drehwinkel die Messung der Verlagerung der Komponente des Kraftfahrzeugs repräsentiert.

## Claims

1. Displacement transducer (100) for detecting a displacement of a component of a motor vehicle, having: a displaceable coupling rod (101) which is couplable to a component of the motor vehicle in order to detect a displacement of the component; a lever (103) for converting a displacement of the displaceable coupling rod (101) into a rotation which represents the displacement of the displaceable coupling rod (101); and an elastic coupling element (105) which elastically connects the displaceable coupling rod (101) to the lever (103) in order to transform the displacement of the coupling rod (101) into the rotation of the lever (103), **characterized in that** the elastic coupling element (105) comprises a helical spring or at least regionally has the shape of a helical spring.

2. Displacement transducer (100) according to Claim 1, wherein the component is one of the following components: chassis, body, headlamp or motor vehicle axle.

3. Displacement transducer (100) according to any of the preceding claims, wherein a coupling rod end facing toward the lever (103) is elastically connected by means of the elastic coupling element to a lever end facing toward the coupling rod.

4. Displacement transducer (100) according to any of the preceding claims, wherein the elastic coupling element (105) is of resiliently elastic form.

5. Displacement transducer (100) according to any of the preceding claims, wherein the displaceable coupling rod (101), the lever (103) and the elastic coupling element (105) are formed by a single-piece moulded part, in particular by a single-piece plastics moulded part or a single-piece metal moulded part.

6. Displacement transducer (100) according to Claim 5, wherein the elastic coupling element (105) has a smaller thickness than a thickness of the lever (103) or of the displaceable coupling rod (101).

7. Displacement transducer (100) according to Claim 5 or 6, wherein the elastic coupling element (105) is formed by a narrowed material portion between the lever (103) and the displaceable coupling rod (101).

8. Displacement transducer (100) according to any of Claims 1 to 4, wherein the elastic coupling element (105) is designed as an individual component which is fastened by fastening elements or in positively locking and/or non-positively locking fashion to the lever (103) and the coupling rod (101).

9. Displacement transducer (100) according to Claim 8, wherein the elastic coupling element (105) is composed of a material whose elastic deformability and/or flexural fatigue strength exceeds that of the material of the coupling rod (101) and of the lever (103).

10. Displacement transducer (100) according to any of the preceding claims, wherein the elastic coupling element (105) has a bend.

11. Displacement transducer (100) according to any of the preceding claims, wherein the elastic coupling element (105) is formed from metal or an elastic plastic, in particular from an elastic plastic comprising rubber, or from a plastic of thermoplastic form.

12. Displacement transducer (100) according to Claim 10, wherein the bend is at least partially circular, or wherein the bend is formed by an at least partial bulge.

13. Displacement transducer (100) according to any of the preceding claims, wherein the central axis of the at least one helical spring is oriented in the same direction as the axis of rotation of the rotation of the lever (103).

14. Measuring device for measuring a displacement of a component of a motor vehicle, having:
the displacement transducer (100) according to any of Claims 1 to 13 for the detection of the displacement of the component of the motor vehicle; and an angle sensor (115) with a shaft (113) which is connected to a lever end, averted from the coupling rod (101), of the lever (103) in order to detect a rotational angle of a rotation of the lever (103) about an axis of rotation running through the shaft (113) during a displacement of the coupling rod (101), wherein the detected rotational angle represents the measurement of the displacement of the component of the motor vehicle.

## Revendications

1. Capteur de déplacement (100) destiné à détecter un déplacement d'un composant d'un véhicule automobile, ledit capteur comprenant :
- une tige d'accouplement déplaçable (101) qui peut être couplée à un composant du véhicule automobile afin de détecter un déplacement du composant ; un levier (103) destiné à convertir un déplacement de la tige d'accouplement déplaçable (101) en une rotation qui représente le déplacement de la tige d'accouplement déplaçable (101) ; et un élément d'accouplement élastique (105) qui relie élastiquement la tige d'accouplement déplaçable (101) au levier (103) afin de convertir le déplacement de la tige d'accouplement (101) en rotation du levier (103), **caractérisé en ce que** l'élément d'accouplement élastique (105) comprend un ressort hélicoïdal ou a la forme d'un ressort hélicoïdal par endroits.

2. Capteur de déplacement (100) selon la revendication 1, le composant étant l'un des composants suivants : mécanisme de roulement, carrosserie, phare ou essieu de véhicule automobile.

3. Capteur de déplacement (100) selon l'une des revendications précédentes, une extrémité de tige d'accouplement tournée vers le levier (103) étant reliée élastiquement à une extrémité de levier tournée vers la tige d'accouplement par le biais de l'élément d'accouplement élastique.

4. Capteur de déplacement (100) selon l'une des revendications précédentes, l'élément d'accouplement élastique (105) étant conçu pour être élastique à ressort.

5. Capteur de déplacement (100) selon l'une des revendications précédentes, la tige d'accouplement déplaçable (101), le levier (103) et l'élément d'accouplement élastique (105) étant formés par une pièce moulée monobloc, notamment par une pièce moulée monobloc en matière plastique ou une pièce moulée monobloc métallique.

6. Capteur de déplacement (100) selon la revendication 5, l'élément d'accouplement élastique (105) ayant une épaisseur inférieure à l'épaisseur du levier (103) ou de la tige d'accouplement déplaçable (101) .

7. Capteur de déplacement (100) selon la revendication 5 ou 6, l'élément d'accouplement élastique (105) étant formé par un amincissement de matière entre le levier (103) et la tige d'accouplement déplaçable (101).

8. Capteur de déplacement (100) selon l'une des revendications 1 à 4, l'élément d'accouplement élastique (105) étant conçu comme un composant distinct qui est relié au levier (103) et à la tige d'accouplement (101) par éléments de fixation ou par une liaison par complémentarité de formes et/ou par une liaison en force.

9. Capteur de déplacement (100) selon la revendication 8, l'élément d'accouplement élastique (105) étant en un matériau dont la déformabilité élastique et/ou la résistance à la fatigue en flexion dépasse celles du matériau de la tige d'accouplement (101) et du levier (103).

10. Capteur de déplacement (100) selon l'une des revendications précédentes, l'élément d'accouplement élastique (105) présentant une courbure.

11. Capteur de déplacement (100) selon l'une des revendications précédentes, l'élément d'accouplement élastique (105) étant en métal ou en une matière plastique élastique, en particulier en une matière plastique élastique contenant du caoutchouc, ou en une matière plastique moulée thermoplastique.

12. Capteur de déplacement (100) selon la revendication 10, la courbure étant au moins partiellement circulaire ou la courbure étant formée par un renflement au moins partiel.

13. Capteur de déplacement (100) selon l'une des revendications précédentes, l'axe central de l'au moins un ressort hélicoïdal étant orienté de la même manière que l'axe de rotation du levier (103).

14. Dispositif de mesure destiné à mesurer le déplacement d'un composant d'un véhicule automobile, ledit dispositif de mesure comprenant :
le capteur de déplacement (100) selon l'une des revendications 1 à 13 destiné à détecter le déplacement du composant du véhicule automobile ; et un capteur d'angle (115) pourvu d'un arbre (113) qui est relié à une extrémité du levier (103) qui est opposée à la tige d'accouplement (101) pour détecter un angle de rotation du levier (103) autour d'un axe de rotation, s'étendant à travers l'arbre (113), lorsque la tige d'accouplement (101) est déplacée, l'angle de rotation détecté représentant la mesure du déplacement du composant du véhicule automobile.
